# FASCICULE DE BREVET EUROPEEN

(11) **EP 2 181 040 B1**
(45) Date de publication et mention de la délivrance du brevet: **16.11.2011**
(21) Numéro de dépôt: 08829107.5
(22) Date de dépôt: 16.07.2008
(51) Int. Cl.: B64D 29/08

(54) **DISPOSITIF DE COMMANDE DES ACTIONNEURS DE MAINTENANCE DE CAPOTS D'UNE NACELLE DE TURBORÉACTEUR**
VORRICHTUNG ZUR STEUERUNG VON WARTUNGSAKTUATOREN DER COWLINGS EINES TURBOSTRAHLMOTOR-SCHUBUMKEHRERS
DEVICE FOR CONTROLLING MAINTENANCE ACTUATORS OF THE COWLINGS OF A TURBOJET ENGINE NACELLE

(30) Priorité: 20.08.2007 FR 0705931
(43) Date de publication de la demande: 05.05.2010
(73) Titulaire: Aircelle, 76700 Gonfreville l'Orcher (FR)
(72) Inventeur: PEREIRA, David, F-91470 Limours (FR)
(74) Mandataire: Maureau, Philippe
(86) Numéro de dépôt international: PCT/FR2008/001046
(87) Numéro de publication internationale: WO 2009/030836

(56) Documents cités:
- EP-A- 0 869 271
- WO-A-2006/134253
- US-B1- 6 622 963

## Description

L'invention se rapporte à un dispositif de commande des actionneurs de maintenance de capots d'une nacelle de turboréacteur d'un aéronef ainsi qu'une nacelle comprenant un tel dispositif.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière destinée à canaliser le flux d'air secondaire du turboréacteur et pouvant abriter des moyens d'inversion de poussée, et est généralement terminée par une tuyère d'éjection dont la sortie est située en aval du turboréacteur.

Les nacelles modernes sont souvent destinées à abriter un turboréacteur double flux apte à générer par l'intermédiaire des pales de la soufflante en rotation un flux d'air froid secondaire qui s'additionne au flux primaire de gaz chauds issus de la turbine du turboréacteur.

Une nacelle présente généralement une structure externe, dite Outer Fixed Structure (OFS), qui définit, avec une structure interne concentrique dite Inner Fixed Structure (IFS) comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La nacelle comprend au moins une paire de capots usuellement formés de deux demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur.

Les deux capots sont généralement montées pivotants autour d'un axe longitudinal formant charnière en partie supérieure (à 12 heures) de l'inverseur. Les capots sont maintenus en position de fermeture au moyen de verrous disposés le long d'une ligne de jonction située en partie inférieure (à 6 heures).

La nacelle peut comprendre par exemple une paire de capots de soufflante, destinés à couvrir la partie soufflante du turboréacteur, et une paire de capots d'inverseur, comprenant un inverseur de poussée et couvrant la partie arrière du turboréacteur.

Chaque capot est ouvert à l'aide d'au moins un actionneur, par exemple un vérin, et est maintenue ouvert à l'aide d'au moins une bielle, l'actionneur et la bielle présentant chacun une première extrémité fixée généralement sur le turboréacteur et une seconde extrémité fixée sur le capot.

De façon connue, les actionneurs peuvent être réalisés sous forme d'actionneurs hydrauliques.

II est également connu d'utiliser des actionneurs électromécaniques pour déplacer certaines parties de la nacelle, comme les capots d'inverseurs de poussée, ainsi que le présente le document EP0843089. Ces actionneurs comportent en général un frein électromécanique de maintien en position déployée. Ce frein peut avoir une position de repos, l'alimentation électrique étant coupée, en mode déverrouillé ou en mode verrouillé, selon les applications.

Le document US 6622963 décrit pour sa part un système de commande dans lequel différents moyens de contrôle des mouvements du capot peuvent être relié à une même source par l'intermédiaire d'un commutateur. Un tel système ne permet pas à lui seul de pouvoir commander plusieurs moteurs d'actionneurs utilisant des tensions d'alimentation différentes.

En effet, dans leur version électromécanique, les actionneurs de capots de soufflante et d'inverseur de poussée peuvent faire appel à des sources de puissance distinctes. Le raccordement de ces actionneurs sur le réseau d'alimentation de l'aéronef pose les problèmes suivants.

La présence de plusieurs actionneurs, qui n'utilisent pas nécessairement la même tension d'alimentation, nécessite de réaliser un boîtier électronique qui réalise plusieurs conversions de la tension d'alimentation en chacune des tensions d'alimentation des actionneurs.

De plus, la présence des actionneurs génère des perturbations conduites et rayonnées sur le réseau qui nécessitent un filtrage du signal dans ce boîtier électronique.

Ce boîtier électronique est mis sous tension quand l'avion est au sol et que le moteur est à l'arrêt. Or, son environnement confiné entre les capots de la nacelle et le moteur le soumet à des contraintes thermiques après l'arrêt moteur: il est soumis au rayonnement solaire sur les capots et au rayonnement du moteur qui est encore chaud après le vol. Le maintien sous tension, actionneurs au repos, capots fermés, occasionne aussi un dégagement de chaleur propre au boîtier ce qui peut impacter le dimensionnement thermique de celui-ci.

La présente invention a pour but de remédier aux inconvénients précédemment évoqués, et en particulier de permettre d'éviter un surdimensionnement thermique des composants ainsi que leur consommation d'énergie en mode veille, ainsi que de limiter les perturbations du réseau d'alimentation électrique de l'aéronef dues à la présence d'actionneurs multiples.

A cet effet, la présente invention a pour objet une nacelle de turboréacteur d'un aéronef comprenant
- au moins un capot,
- au moins un actionneur de maintenance de l'au moins un capot - un boîtier de commande permettant à un utilisateur de commander le fonctionnement des actionneurs,
- un dispositif de commande d'actionneurs de maintenance de capots de ladite nacelle,
ledit dispositif de commande comprenant:
- un premier étage destiné à être raccordé à un réseau d'alimentation électrique de l'aéronef et agencé pour délivrer une première tension continue,
- au moins un second étage de puissance comprenant des convertisseurs de la première tension continue provenant du premier étage vers une seconde tension continue destiné à l'alimentation électrique d'au moins un actionneur de maintenance relié en aval du dispositif,
- des moyens de commande de l'au moins un second étage, et
- des moyens de mise en communication des moyens de commande avec au moins un boîtier de commande permettant à un utilisateur de commander le fonctionnement des actionneurs,
- les moyens de commande étant agencés pour réaliser des passages entre un premier mode de fonctionnement dans lequel le ou les seconds étages sont alimentés et un second mode de veille dans lequel le ou les seconds étages ne sont pas alimentés par le premier étage.

Grâce aux dispositions selon l'invention, la consommation électrique de l'ensemble des actionneurs et du dispositif est optimisée en mode veille par les moyens de commande, qui comprennent par exemple par une ou plusieurs cartes électroniques. Seuls des composants faiblement consommateurs en énergie sont alimentés. Les étages de puissance ne sont pas alimentés, et les actionneurs ne sont donc pas alimentés. Une action sur un des boîtiers de commande d'un des actionneurs, qui peuvent comprendre par exemple un interrupteur ou un bouton poussoir déporté, entraîne la mise sous tension des étages de puissance, ce qui rend l'utilisation des actionneurs de maintenance possible.

II est ainsi possible de s'affranchir d'un surdimensionnement thermique des boîtiers. Ces dispositions sont particulièrement importantes dans le cas de conditions de température extérieures élevées, par exemple entre 30 et 55°C. Dans ces conditions, la température sous un capot fermé peut monter jusqu'à 90°C. II convient dans ces conditions d'éviter toute production de chaleur pouvant endommager les composants.

De plus, la présence des moyens de mise en veille permet d'éviter que les actionneurs ne soient alimentés en vol en cas d'oubli de la coupure du réseau électrique de maintenance avant le décollage ou la mise en route accidentelle, ce qui pourrait perturber d'autres composants.

En outre, ces dispositions permettent d'augmenter la durée d'utilisation des composants électroniques des actionneurs qui sont moins longtemps sous tension.

Avantageusement, les moyens de commande sont agencés pour provoquer le passage du premier mode de fonctionnement au second mode de veille en fonction de la détection d'un état de fermeture d'au moins un capot.

Ces dispositions permettent de réaliser un passage en mode veille sans intervention d'un utilisateur, à partir de la position des capots. Ainsi le mode veille n'est actif que lorsque le ou les capots sont fermés.

Avantageusement, les moyens de commande sont agencés pour provoquer le passage du second mode de veille vers le premier mode de fonctionnement en fonction de la réception d'une instruction de commande d'un boîtier de commande.

Selon un mode de réalisation, le passage du second mode de veille au premier mode de fonctionnement est opéré uniquement lorsque cette instruction de commande a été initiée après la mise sous tension du réseau d'alimentation.

Avantageusement, au moins une partie du premier étage n'est pas alimentée en mode veille.

Selon un mode de réalisation, la position ouverte ou fermée d'un capot est détectée par comparaison de la consommation en énergie de l'actionneur du capot et/ou du frein de l'actionneur avec une ou plusieurs valeurs prédéterminées.

Ces dispositions permettent la détection de la position du capot, ouvert ou fermé sans utilisation de capteurs de position dédiés.

Avantageusement, la consommation en énergie d'actionneur est mesurée lorsque le capot est dans une position statique.

Selon un mode de réalisation, le dispositif comprend au moins deux seconds étages fournissant des tensions d'alimentation distinctes à des actionneurs distincts.

Avantageusement, le dispositif présente un troisième mode de diagnostic dans lequel le dispositif fournit des informations sur son état sur une sortie d'un second étage.

Ces dispositions permettent, simplement et sans passer par un bus de communication, de connaître l'état du dispositif en lisant le niveau de tension ou la fréquence sur une sortie d'un second étage fonctionnant de préférence sous faible tension, des seuils de tension ou de fréquence permettant de connaître les modes de panne.

Selon un mode de réalisation, les moyens de commande provoquent le passage en mode diagnostic du dispositif à réception d'une séquence d'instructions de commandes spécifiques d'un boîtier de commande.

Ces dispositions permettent de s'affranchir d'une interface de commande spécifique pour le mode diagnostic.

Selon une possibilité, le dispositif est disposé dans le carter de soufflante du turboréacteur.

Selon une autre possibilité, le dispositif est disposé dans le mât de fixation de la nacelle à l'aile de l'aéronef.

Cette disposition permet de réduire les contraintes thermiques pour le dispositif en l'éloignant du turboréacteur.

De toute façon, l'invention sera bien comprise à l'aide de la description qui suit, en référence au dessin schématique annexé représentant, à titre d'exemple non limitatif, une forme d'exécution de ce dispositif.
La figure 1 est une vue générale schématique d'une nacelle et d'un turboréacteur en perspective par dessous, les capots de soufflante et d'inverseur étant ouverts.
La figure 2 est une vue schématique de face de la nacelle de figure 1.
La figure 3 est une représentation schématique d'un dispositif selon l'invention.

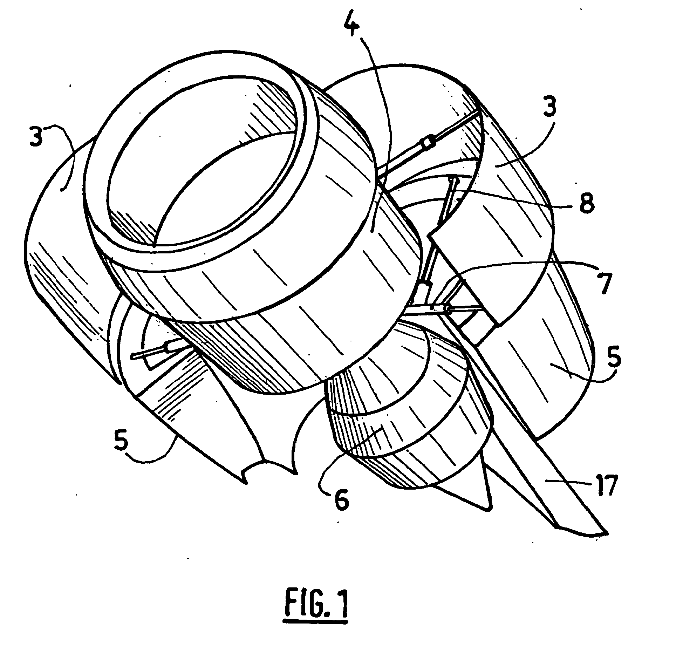

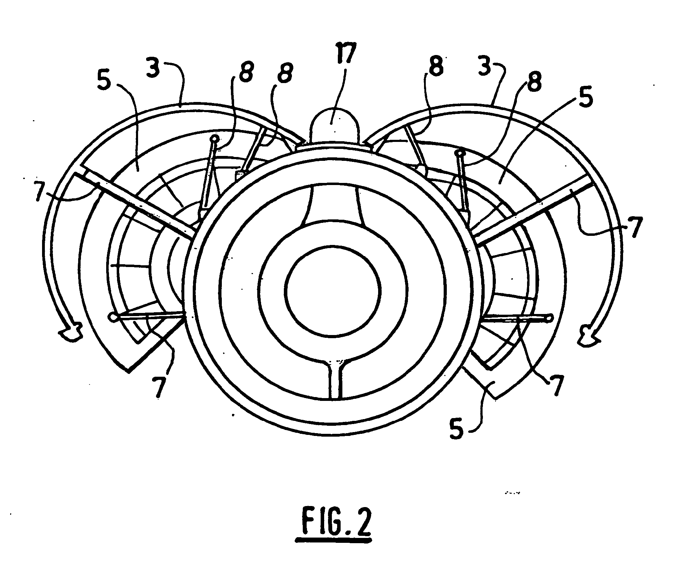

Comme représenté sur les figures 1 et 2, une nacelle d'aéronef 2 comporte de façon connue, comme décrit précédemment, une paire de capots 3 de soufflante, destinés à couvrir la partie soufflante du turboréacteur 4, et une paire de capots d'inverseur 5, comprenant un inverseur de poussée et couvrant la partie arrière 6 du turboréacteur.

Ces capots 3, 4 sont entraînés en mouvement entre leur position de fermeture et d'ouverture par un actionneur constitué par exemple par un vérin électromécanique 7 et maintenus en position ouverte par une bielle 8, comme cela est visible notamment sur la figure 2.

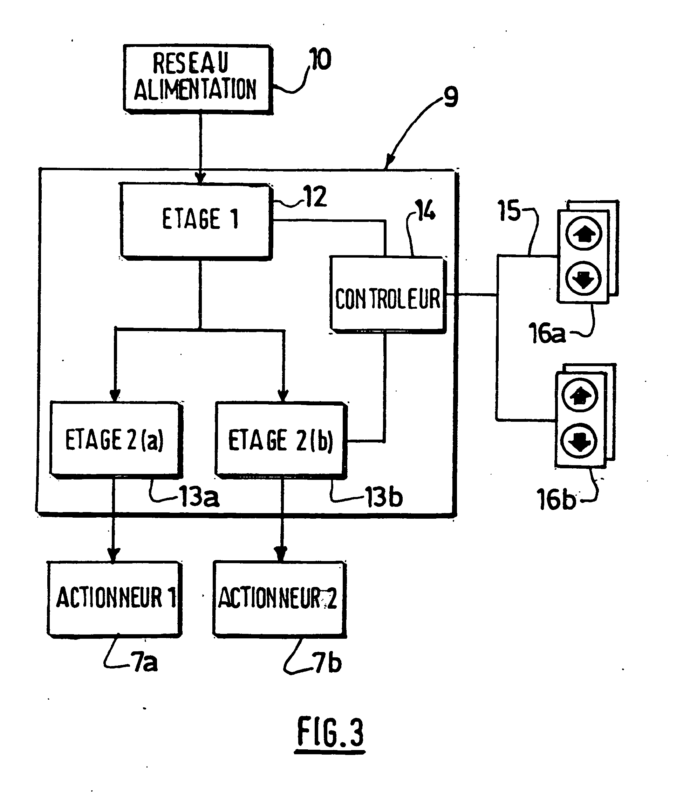

Selon l'invention, la nacelle comprend un dispositif de commande 9 des actionneurs de maintenance 7 représenté schématiquement sur la figure 3.

Ce dispositif 9 comprend un premier étage 12 auquel est raccordé un réseau d'alimentation électrique 10 de l'aéronef, qui fournit de façon usuelle une tension alternative triphasée. Ce premier étage 12 comprend en particulier un convertisseur de tension alternative en tension continue, comprenant un redresseur de tension et un composant d'élévation de la tension, par exemple pour fournir une tension continue de l'ordre de plusieurs centaines de volts.

Le dispositif de commande 12 comprend également au moins deux second étages de puissance 13a, 13b destinés à l'alimentation d'au moins deux actionneurs de maintenance 7a, 7b reliés en aval au dispositif. En particulier, les seconds étages de puissance 13a, 13b comprennent des convertisseurs d'une première tension continue provenant du premier étage vers une seconde tension continue destinée à alimenter un actionneur.

Ces seconds étages fournissent des tensions d'alimentation distinctes à des actionneurs distincts. En particulier, deux tensions très différentes de l'ordre respectivement de quelques dizaines de volts d'une part et de quelques centaines de volts d'autre part peuvent être fournies à deux actionneurs 7 distincts par deux seconds étages 13a et 13b.

Le dispositif comprend en outre des moyens de commande des premiers et seconds étages 12, 13a, 13b, constitués par un microcontrôleur 14.

Le microcontrôleur 14 est relié par des moyens de mise en communication 15, par exemple de type filaire avec au moins un boîtier de commande d'actionneur 16a, 16b destiné à un utilisateur.

Le microcontrôleur 14 est agencé pour réaliser une mise en veille permettant de supprimer l'alimentation électrique des actionneurs 7a, 7b de maintenance ou de rétablir cette alimentation lors d'une instruction de commande provenant des boîtiers de commande 16a, 16b.

Lors de cette mise en veille, les seconds étages 13a, 13b sont désactivés, ainsi que le composant d'élévation de tension du premier étage 12 de façon à diminuer de façon significative la consommation électrique du dispositif.

La mise en veille des actionneurs est opérée lorsque les capots 3, 5 sont en position fermée.

Afin de déterminer la position des capots 3, 5, le microcontrôleur 14 réalise une détection de la position ouverte ou fermée du capot 3, 5 par comparaison de la consommation en énergie de l'actionneur 7a, 7b ou du frein de l'actionneur avec une ou plusieurs valeurs déterminées.

En effet, la consommation électrique d'un actionneur 7 diffère suivant que l'actionneur est en position rétractée, intermédiaire ou déployée, ce qui correspond à des positions fermée, intermédiaire ou ouverte du capot correspondant.

II est à noter que la mesure de consommation est réalisée lorsque le capot est dans une position statique, c'est-à-dire lorsqu'aucun ordre n'est donnée par l'intermédiaire de boutons de commande du boîtier de commande 16a, 16b.

Le passage d'un mode veille à un mode de mise sous tension des étages 12, 13a, 13b du dispositif est réalisé lors de l'activation d'un bouton de commande d'un boîtier de commande 16a, 16b.

Toutefois, les commandes sont vérifiées préalablement par le microcontrôleur 14, afin d'identifier si cette commande est cohérente avec la position du capot 3, 5.

Ainsi, si un capot 3, 5 est déjà fermé, un ordre de fermeture émis à partie du boîtier de commande 16a, 16b ne générera pas de sortie du mode veille.

En outre, la réception d'une commande en provenant des boîtiers de commande 16a, 16b d'actionneur entraînera une sortie du mode veille par le microcontrôleur 14 uniquement lorsque cette commande a débuté après la mise sous tension du réseau d'alimentation 10. Dans le cas contraire, une nouvelle commande sera attendue.

Le dispositif 9 comprend également des moyens de diagnostic de son état.

En particulier, ce diagnostic peut être réalisé en branchant un instrument de mesure de tension sur la sortie d'un second étage de préférence fournissant une tension d'alimentation basse, par exemple de 28V.

En effectuant une séquence de commande spécifique, par exemple une séquence de plusieurs appuis sur les boutons, sur un boîtier de commande 16a, 16b, le dispositif passe dans un mode diagnostic, dans lequel des valeurs spécifiques de tension ou de fréquence de signal sont émise sur la sortie d'un second étage 13a, 13b. Chaque valeur ou fréquence correspond à un état du dispositif, par exemple à un état de marche ou à un état de panne.

Le dispositif de commande 9 est logé dans un boîtier disposé dans le carter de soufflante 4.

Selon une variante, le boîtier est disposé dans le mât de fixation 17 de la nacelle à l'aile de l'aéronef, ce qui permet de diminuer les contraintes thermiques sur le dispositif.

Comme il va de soi, l'invention ne se limite pas à la seule forme d'exécution du dispositif, décrite ci-dessus à titre d'exemple, mais elle embrasse au contraire toutes les variantes couvertes par le libellé des revendications.

ISl est à noter en particulier que d'autres types de capots pourraient être commandés par les actionneurs alimentés par le dispositif.

## Revendications

1. Nacelle de turboréacteur d'un aéronef comprenant :
- au moins un capot (3,5) ;
- au moins un actionneur (7a,7b) de maintenance de l'au moins un capot (3, 5),
- un boîtier de commande (16a, 16b) permettant à un utilisateur de commander le fonctionnement des actionneurs (7a, 7b), et
- un dispositif (9) de commande d'actionneurs (7a, 7b) de maintenance de capots (3, 5) de ladite nacelle,
ledit dispositif (9) de commande comprenant :
- un premier étage (12) destiné à être raccordé à un réseau d'alimentation électrique (10) de l'aéronef et agencé pour délivrer une première tension continue,
- au moins un second étage de puissance (13a, 13b) comprenant des convertisseurs de la première tension continue provenant du premier étage (12) vers une seconde tension continue destiné à l'alimentation électrique d'au moins un actionneur (7a, 7b) de maintenance relié en aval du dispositif (9),
- des moyens de commande (14) de l'au moins un second étage (12, 13a, 13b), et
- des moyens de mise en communication (15) des moyens de commande (14) avec au moins un boîtier de commande (16a, 16b) permettant à un utilisateur de commander le fonctionnement des actionneurs,
les moyens de commande étant agencés pour réaliser des passages entre un premier mode de fonctionnement dans lequel le ou les seconds étages (13a, 13b) sont alimentés et un second mode de veille dans lequel le ou les seconds étages (13a, 13b) ne sont pas alimentés par le premier étage (12).

2. Nacelle d'aéronef selon la revendication 1, dans lequel les moyens de commande (14) sont agencés pour provoquer le passage du premier mode de fonctionnement au second mode de veille en fonction de la détection d'un état de fermeture d'au moins un capot (3, 5).

3. Nacelle d'aéronef selon l'une des revendications précédentes, dans lequel les moyens de commande (14) sont agencés pour provoquer le passage du second mode de veille vers le premier mode de fonctionnement en fonction de la réception d'une instruction de commande d'un boîtier de commande (16a, 16b).

4. Nacelle d'aéronef selon la revendication 3, dans lequel le passage du second mode de veille au premier mode de fonctionnement est opéré uniquement lorsque cette instruction de commande a été initiée après la mise sous tension du réseau d'alimentation (10).

5. Nacelle d'aéronef selon l'une des revendications précédentes, dans lequel les moyens de commande (14) agissent sur le premier étage (12) de manière à ce qu'au moins une partie du premier étage (12) ne soit pas alimentée lors du mode veille.

6. Nacelle d'aéronef selon l'une des revendications précédentes, dans lequel la position ouverte ou fermée d'un capot (3, 5) est détectée par les moyens de commande (14) en comparant la consommation en énergie de l'actionneur (7a, 7b) du capot (3, 5) et/ou du frein de l'actionneur (7a, 7b) avec une ou plusieurs valeurs prédéterminées.

7. Nacelle d'aéronef selon la revendication 6, dans lequel la consommation en énergie d'actionneur (7a, 7b) est mesurée par les moyens de commande (14) lorsque le capot (3, 5) est dans une position statique.

8. Nacelle d'aéronef selon l'une des revendications précédentes, comprenant au moins deux seconds étages (13a, 13b) fournissant des tensions d'alimentation distinctes à des actionneurs (7a, 7b) distincts.

9. Nacelle d'aéronef selon l'une des revendications précédentes, présentant un troisième mode de diagnostic dans lequel le dispositif fournit des informations sur son état sur une sortie d'un second étage (13a, 13b).

10. Nacelle d'aéronef selon la revendication 9, dans lequel les moyens de commande (14) provoquent le passage en mode diagnostic du dispositif à réception d'une séquence d'instructions de commandes spécifiques d'un boîtier de commande (16a, 16b).

11. Nacelle selon l'une des revendications 1 à 10, dans laquelle le dispositif (9) est disposé dans le carter de soufflante (4) du turboréacteur.

12. Nacelle selon l'une des revendications 1 à 10 dans laquelle le dispositif (9) est disposé dans le mât de fixation (17) de la nacelle à l'aile de l'aéronef.

## Claims

1. An aircraft turbojet engine nacelle comprising:
- at least one cowling (3, 5);
- at least one maintenance actuator (7a, 7b) for the at least one cowling (3, 5),
- a control housing (16a, 16b) allowing a user to control the operation of the actuators (7a, 7b), and
- a device (9) for controlling the actuators (7a, 7b) for maintaining the cowlings (3, 5) of said nacelle,
said control device (9) comprising:
- a first stage (12) intended to be connected to an electrical power system (10) of the aircraft and arranged to deliver a first direct voltage,
- at least one second power stage (13a, 13b) comprising converters for the first direct voltage coming from the first stage (12) toward a second direct voltage intended to supply electricity to the at least one maintenance actuator (7a, 7b) connected downstream of the device (9),
- control means (14) for the at least one second stage (12, 13a, 13b), and
- means (15) for putting the control means (14) in communication with at least one control housing (16a, 16b) allowing a user to control the operation of the actuators,
the control means being arranged to produce transitions between a first operating mode in which the second stage(s) (13a, 13b) are powered and a second standby mode in which the second stage(s) (13a, 13b) are not powered by the first stage (12).

2. The aircraft nacelle according to claim 1, wherein the control means (14) are arranged to cause the transition from the first operating mode to the second standby mode depending on the detection of a closing state of at least one cowling (3, 5).

3. The aircraft nacelle according to one of the preceding claims, wherein the control means (14) are arranged to cause the transition from the second standby mode to the first operating mode depending on the reception of a control instruction from a control housing (16a, 16b).

4. The aircraft nacelle according to claim 3, wherein the transition from the second standby mode to the first operating mode is done only when said control instruction has been initiated after powering on the power grid (10).

5. The aircraft nacelle according to one of the preceding claims, wherein the control means (14) act on the first stage (12) so that at least part of the first stage (12) is not powered in the standby mode.

6. The aircraft nacelle according to one of the preceding claims, wherein the open or closed position of a cowling (3, 5) is detected by the control means (14) by comparing the energy consumption of the actuator (7a, 7b) of the cowling (3, 5) and/or the brake of the actuator (7a, 7b) with one or more predetermined values.

7. The aircraft nacelle according to claim 6, wherein the energy consumption of the actuator (7a, 7b) is measured by the control means (14) when the cowling (3, 5) is in a static position.

8. The aircraft nacelle according to one of the preceding claims, comprising at least two second stages (13a, 13b) providing distinct power voltages to distinct actuators (7a, 7b).

9. The aircraft nacelle according to one of the preceding claims, having a third diagnostic mode in which the device provides information on its status on an output of a second stage (13a, 13b).

10. The aircraft nacelle according to claim 9, wherein the control means (14) cause the reception device to go to diagnostic mode upon receipt of a sequence of specific control instructions from a control housing (16a, 16b).

11. The nacelle according to one of claims 1 to 10, wherein the device (9) is arranged in the fan case (4) of the turbojet engine.

12. The nacelle according to one of claims 1 to 10, wherein the device (9) is arranged in the fastening pylon (17) fastening the nacelle to the wing of the aircraft.

## Patentansprüche

1. Triebwerksgondel eines Flugzeugs, umfassend:
- mindestens eine Verkleidung (3, 5);
- mindestens ein Betätigungselement (7a, 7b) zur Wartung der mindestens einen Verkleidung (3, 5),
- ein Steuergehäuse (16a, 16b), das einem Benutzer ermöglicht, den Betrieb der Betätigungselemente (7a, 7b) zu steuern, und
- eine Vorrichtung (9) zur Steuerung von Betätigungselementen (7a, 7b) zur Wartung von Verkleidungen (3, 5) der Gondel,
wobei die Vorrichtung (9) zur Steuerung Folgendes umfasst:
- eine erste Stufe (12), die dazu bestimmt ist, mit einem elektrischen Versorgungsnetz (10) des Flugzeugs verbunden zu werden und angeordnet ist, um eine erste Gleichspannung zu liefern,
- mindestens eine zweite Leistungsstufe (13a, 13b), umfassend Umwandler der ersten Gleichspannung, die von der ersten Stufe (12) stammt, in eine zweite Gleichspannung, die für die elektrische Versorgung von mindestens einem Betätigungselement (7a, 7b) zur Wartung bestimmt ist, das der Vorrichtung (9) nachgeordnet verbunden ist.
- Steuermittel (14) der mindestens zweiten Stufe (12, 13a, 13b), und
- Mittel zur Verbindung (15) der Steuermittel (14) mit mindestens einem Steuergehäuse (16a, 16b), das einem Benutzer ermöglicht, den Betrieb der Betätigungselemente zu steuern,
wobei die Steuermittel angeordnet sind, um Übergänge zwischen einem ersten Betriebsmodus, in dem der oder die zweiten Stufen (13a, 13b) versorgt werden, und einem zweiten Ruhemodus, in dem der oder die zweiten Stufen (13a, 13b) nicht von der ersten Stufe (12) versorgt werden, herzustellen.

2. Flugzeuggondel nach Anspruch 1, wobei die Steuermittel (14) angeordnet sind, um den Übergang vom ersten Betriebsmodus zum zweiten Ruhemodus je nach dem Nachweis eines Verschlusszustands mindestens einer Verkleidung (3, 5) hervorzurufen.

3. Flugzeuggondel nach einem der vorhergehenden Ansprüche, wobei die Steuermittel (14) angeordnet sind, um den Übergang vom zweiten Ruhemodus in den ersten Betriebsmodus je nach dem Empfang einer Steueranweisung von einem Steuergehäuse (16a, 16b) hervorzurufen.

4. Flugzeuggondel nach Anspruch 3, wobei der Übergang vom zweiten Ruhemodus in den ersten Betriebsmodus nur dann erfolgt, wenn diese Steueranweisung nach dem Unterspannungssetzen des Versorgungsnetzes (10) initiiert wurde.

5. Flugzeuggondel nach einem der vorhergehenden Ansprüche, wobei die Steuermittel (14) so auf die erste Stufe (12) wirken, dass mindestens ein Teil der ersten Stufe (12) im Ruhemodus nicht versorgt wird.

6. Flugzeuggondel nach einem der vorhergehenden Ansprüche, wobei die offene oder die geschlossene Position einer Verkleidung (3, 5) von den Steuermitteln (14) festgestellt wird, indem der Energieverbrauch des Betätigungselements (7a, 7b) der Verkleidung (3, 5) und/oder der Bremse des Betätigungselements (7a, 7b) mit einem oder mehreren vorbestimmten Werten verglichen wird.

7. Flugzeuggondel nach Anspruch 6, wobei der Stromverbrauch des Betätigungselements (7a, 7b) von den Steuermitteln (14) gemessen wird, wenn sich die Verkleidung (3, 5) in einer statischen Position befindet.

8. Flugzeuggondel nach einem der vorhergehenden Ansprüche, umfassend mindestens zwei zweite Stufen (13a, 13b), die verschiedene Versorgungsspannungen an verschiedene Betätigungselemente (7a, 7b) liefern.

9. Flugzeuggondel nach einem der vorhergehenden Ansprüche, aufweisend einen dritten Diagnosemodus, in dem die Vorrichtung Informationen über ihren Zustand über einen Ausgang einer zweite Stufe (13a, 13b) liefert.

10. Flugzeuggondel nach Anspruch 9, wobei die Steuermittel (14) den Übergang der Vorrichtung in den Diagnosemodus beim Empfang einer Sequenz von spezifischen Steueranweisungen eines Steuergehäuses (16a, 16b) hervorrufen.

11. Flugzeuggondel nach einem der Ansprüche 1 bis 10, wobei die Vorrichtung (9) im Gebläsegehäuse (4) des Triebwerks angeordnet ist.

12. Flugzeuggondel nach einem der Ansprüche 1 bis 10, wobei die Vorrichtung (9) im Mast zur Befestigung (17) der Gondel an die Tragfläche des Flugzeugs angebracht ist.
